## Europäisches Patentamt
(19) **European Patent Office**

**Office européen des brevets**

(11) Veröffentlichungsnummer: **0 270 012**
**B1**

(12)

# EUROPÄISCHE PATENTSCHRIFT

(45) Veröffentlichungstag der Patentschrift:
27.06.90

(51) Int. Cl.⁵: **B65G 53/46**

(21) Anmeldenummer: **87117518.8**

(22) Anmeldetag: **27.11.87**

(54) **Verfahren und Vorrichtung zum Einschleusen von Schüttgut.**

(30) Priorität: **29.11.86 DE 3640282**

(43) Veröffentlichungstag der Anmeldung:
**08.06.88 Patentblatt 88/23**

(45) Bekanntmachung des Hinweises auf die Patenterteilung:
**27.06.90 Patentblatt 90/26**

(84) Benannte Vertragsstaaten:
**AT BE CH DE FR IT LI LU NL SE**

(56) Entgegenhaltungen:
**DE-A- 2 353 288**
**DE-C- 868 728**

(73) Patentinhaber: **Alb. Klein GmbH & Co. KG, Postfach 27, D-5241 Niederfischbach(DE)**

(72) Erfinder: **Federhen, Bernd, D-5900 Siegen(DE)**
Erfinder: **May, Manfred, D-5241 Niederfischbach(DE)**

(74) Vertreter: **Hiebsch, Gerhard F., Dipl.-Ing. et al, Erzbergerstrasse 5A Postfach 464, D-7700 Singen 1(DE)**

**Beschreibung**

Die Erfindung betrifft eine Vorrichtung mit einem Schleusenraum zum Einschleusen eines Haufwerkes von Schüttgutpartikeln aus einem Stauraum -- beispielsweise einer Rohrleitung eines Vorratsbehälters -- in eine pneumatische Förderleitung, wobei der Schleusenraum wechselweise einerseits mittels eines bewegbaren Schließkegels und diesem gegenüberliegender Dichtkante als dessen Sitz gegen den Stauraum sowie anderseits -- bevorzugt durch eine Klappe -- gegen die Förderleitung verschließbar ist. Darüberhinaus erfaßt die Erfindung ein Verfahren zum Einschleusen eines Haufwerkes in eine pneumatische Förderleitung mittels vorstehend genannter Vorrichtung.

Eine Vorrichtung der genannten Art ist der DE-OS 31 44 592 zu entnehmen, mit der ein nahezu kontinuierlicher Förderstrom erzeugt werden kann, wenn mehrere Vorrichtungen nacheinander abwechselnd dem Fördervorgang zugeschaltet werden. En derartiges System ist von sog. Tandemanlagen her bekannt und erfordert erheblichen apparativen Aufwand. Als Verschluß dient ein pneumatisch anhebbarer Kegel, dem mit entsprechendem Aufwand ein Vorkegelverschluß zugeordnet ist, mit dem ein Zulauf in eine Dosierkammer gesteuert werden muß.

Diese bekannte Vorrichtung benötigt also einen Vorverschluß, auch hat sie ein separates Abluftventil, dessen Abluft abgeführt werden muß; durch die Zuführung wird die Luft zum Schließen des Verschlusses und zum Fördern eingespeist. Der Förderluftdruck muß dem erforderlichen Schließdruck des Verschlusses entsprechen, was hier eine ordentliche Einstellung der Luftverhältnisse unmöglich werden läßt.

Durch die CH-PS 340 765 ist dem Fachmann zudem nahegelegt worden, der Dichtkante wenigstens einen ringförmigen Zufuhrkanal für einen zu einem Verschlußkopf gerichteten Luftschleier zuzuordnen, der über eine Reihe von Löchern jenen Luftschleier erzeugt.

Die Spülluft strömt nach dem Schließvorgang ungenutzt oberhalb des Verschlußkopfes ab und kann bei dieser Anordnung nicht als Förderluft benutzt werden. Die Zuführung ist am ortsveränderbaren Verschlußkopf angeordnet, muß also recht beweglich sein. Eine dichte Verbindung zu einem Vorratsbehälter od. dgl. ist nicht vorgesehen.

Mit der DE-OS 34 20 616 wurde eine Vorrichtung zum nahezu kontinuierlichen Fördern von Schüttgütern vorgeschlagen, welcher nur ein Fördergefäß benötigt und ohne eine vorgeschaltete Dosiereinrichtung auskommt. Diese Vorrichtung ist auch für Förderdrücke um 6 bar geeignet und erlaubt es, die zum pneumatischen Fördern zugeführte Energie optimal zu nutzen, bei allen Betriebszuständen Betriebssicherheit zu gewährleisten und im wesentlichen verschleißfrei zu arbeiten.

Hierzu ist jener Dichtkante wenigstens ein ringförmiger Zufuhrkanal für einen zum Schließkegel gerichteten Luftschleier zugeordnet und eine einends angelenkte Klappe von einem Kraftspeicher untergriffen, wobei die Klappe in ihrer Verschlußstellung dem etwa horizontalen Rand einer Mündung des Schleusenraumes anliegt. Die Dichtkante wird an einem elastischen Dichtungsring vorgesehen und befindet sich oberhalb eines Balgzylinders, dem der Schließkegel aufsitzt und von dem er bewegt wird.

Angesichts dieses Standes der Technik hat sich der Erfinder das Ziel gesetzt, die gattungsgemäße Vorrichtung weitergehend zu verbessern und eine besonders günstige Ausgestaltung der Einlaufseite des Schleusenraumes anzubieten.

Zur Lösung dieser Aufgabe führt, daß der Schließkegel Basisteil eines etwa axial in Förderrichtung vor dem Schleusenraum verlaufenden Hohlprofiles mit wenigstens einer außerhalb des Fließweges des Schüttgutes angeordneten Oeffnung ist, deren Querschnitt in der Bewegungsbahn eines Verschlußelementes liegt, welches in Abhängigkeit vom Fördervorgang zu der Oeffnung hin oder von ihr weg bewegt werden kann.

Zudem soll das Verschlußelement am freien Ende eines Stabes sitzen und in seiner Schließstellung einen die Oeffnung/en aufweisenden Kopfteil des als Rohr ausgebildeten Hohlprofils tragen, dessen Innenraum Teil des Schleusenraumes -- also nach außen hin abgedichtet -- ist.

Dank dieser Maßgabe ist am Ende eines Fördervorganges ein problemloses Entlüften des Schleusenraumes durch den Restteil des Haufwerkes am Zulauf hin möglich.

Bevorzugt findet sich dieses Rohr in einem Vorraum des Schleusenraumes; dieser Vorraum weist erfindungsgemäß nach oben hin zumindest eine Entlüftungsöffnung auf sowie einen bevorzugt seitlichen Zulauf für das Schüttgut.

Nach einem weiteren Merkmal der Erfindung ist dem Schließkegel zum Schleusenraum hin in Abstand ein Kegelkopf zugeordnet und dieser mit jenem Stab fest verbunden - der Abstand des Kegelkopfes zur Spitze des Verschlußelementes ist größer als die freie innere Länge des Rohres, so daß zwischen Schließkegel und Kegelkopf stets ein ausreichender Spalt verbleibt, der in einen Ringraum zwischen Rohr und Stab übergeht. Dieser Ringraum endet dann an wenigstens einer Oeffnung im Kopf des Rohres.

Erfindungsgemäß durchsetzt der Stab den Kegelkopf und lagert mit seinem freien unteren Ende lose in einem Führungsrohr, welches die Hubbewegung des Stabes ermöglicht, anderseits ein Auslenken verhindern.

Das Anheben bzw. Absenken des Stabes -- und damit des Verschlußelementes -- erfolgt mittels des Kegelkopfes, der mit einem aus DE-OS 34 20 616 bekannten Balgorgan verbunden ist und bei Beaufschlagung dieses Balgorgans mit Luft angehoben wird. Gleichzeitig wird naheliegenderweise der axiale Stab nach oben geführt und mit diesem der auflastende Rohrkopf, also auch der Schließkegel. Wird der Balg entlüftet, kann sich das Verschlußelement vom Rohrkopf lösen und gibt dann dessen Entlüftungsöffnung frei. Wie weiter unten noch erläutert, ist dies dadurch möglich, daß Schießkegel und Rohr vom Luftdruck noch in einer oberen Position gehalten werden, während der Kegelkopf mit seinem Stab bereits nach unten sinkt.

Als günstig hat es sich erwiesen, das Verschlußelement als haubenähnliche Büchse aus begrenzt elastischem Werkstoff auszubilden, welche auf dem oberen Stabende sitzt und das Abdichten dieses Teiles des Schleusenraumes an der Oeffnung des Rohrkopfes gewährleistet.

Der Stab ist bevorzugt in zwei axiale Abschnitte unterteilt, welche durch den Kegelkopf miteinander verbunden, bevorzugt in diesen eingeschraubt, sind.

Um ein sicheres Entlüften des Schleusenraumes durch den Rohrkopf zu ermöglichen, ist dieser in dem erwähnten Vorraum oberhalb des Zulaufes für das Schüttgut vorgesehen und unterhalb des Durchbruches zum Entlüften des Vorraumes.

Zur besseren Umleitung des durch den seitlichen Zulauf eingebrachten Schüttgutes ist in Abstand zur Rohr gegenüber der Zulaufmündung eine etwa vertikale Prallwand in dem von einer Rohrwandung gebildeten Vorraum angeordnet.

Von Bedeutung ist auch die Anordnung des an sich bekannten Dichtringes, welcher den Sitz für den Schließkegel anbietet; der Vorraum ist von einer Rohrwand begrenzt, die mit einer sich in Förderrichtung konisch verjüngenden Zulauffläche an den Dichtring angrenzt, wobei an diesem die Rohrwandung eine Ringnut zur Luftführung aufweist. Letztere ist mit einer Ringnut und einem entsprechenden Luftführungskanal der anderen Seite des Dichtungsringes durch in diesem vorgesehene Durchbrüche verbunden. An die untere Ringnut schließen radiale Luftkanäle an, deren Mündungen zum Schließkegel gerichtet sind. Dank dieser Maßgabe ist der Bereich dieser Luftkanäle oder Bohrungen weitestgehend aus dem Förderstrom herausgehalten, zumal die Mündungen der Luftkanäle in Förderrichtung schulterartig nach außen versetzt sind.

Die hervorgehobenen Merkmale sind grundsätzlich bei allen gattungsgemäßen Vorrichtungen einsetzbar, werden aber bevorzugt im Zusammenhang mit einer den Auslauf des Schleusenraumes verschließenden Klappe verwendet, welche in DE-OS 34 20 616 ausführlich erläutert ist.

Das nachfolgende kurz umrissene Förderverfahren wird aus Gründen der Vereinfachung unter Einbeziehung der vorstehend genannten Klappe beschrieben. An deren Stelle sind selbstverständlich auch andere Schließorgane einsetzbar.

Für das Füllen des Schleusenraumes wird dieser nach unten hin von jener von einer Schließfeder beaufschlagten Klappe verschlossen, der Schließkegel befindet sich in Abstand zu seiner Dichtkante, die Oeffnung des Rohrkopfes ist geschlossen, da letzterer auf dem Verschlußelement des beschriebenen Stabes ruht.

Nach Ablauf einer einstellbaren Füllzeit oder bei Signal einer Füllstandanzeige wird durch die beschriebenen Ringnuten Blasluft gegen den Schließkegel geführt und gleichzeitig der Kegelkopf von dem Balgzylinder angehoben. Der Kegelkopf und seine Stange nehmen den Rohrkopf mit nach oben und damit auch den Schließkegel, der gegen die Dichtkante stößt. Aus den radialen Luftkanälen weiter zuströmende Luft baut dann im Druckraum des Schleusengefäßes den erforderlichen Förderdruck auf, bis dieser jenem der Förderleitung entspricht; hierdurch öffnet sich die Auslaufklappe und das Schüttgut strömt in die Förderleitung.

Jene Klappe kann sich dann wieder schließen, wenn sie vom Schüttgut freigegeben wird, also dessen Spiegel unter die Bewegungsbahn der Klappe gesunken ist. Ist die untere Mündung des Druckraumes durch die Klappe erneut geschlossen worden, wird die Lufteinspeisung durch die verschiedenen Luftkanäle unterbrochen, der Balg entlüftet und der Kegelkopf abgesenkt.

In dieser Situation wird der Schließkegel durch den immer noch im Druckraum herrschenden Luftdruck an seiner Dichtkante gehalten, bis sich der Ueberdruck abgebaut hat; dann erst fällt der Schließkegel durch sein Eigengewicht abwärts, bis der Rohrkopf wieder auf dem Verschlußelement des Stabes ruht. Der Abstand zwischen der Innenfläche des Schließkegels und der Außenfläche des Kegelkopfes hat sich dabei zwar verringert, ist aber immer noch zur Beibehaltung jenes Spaltes vorhanden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1: einen Teillängsschnitt durch eine erfindungsgemäße Vorrichtung;

Fig. 2: einen die Fig. 1 axial ergänzenden anderen Teil der Vorrichtung;

Fig. 3: einen Teil der Fig. 1 in vergrößerter Wiedergabe;

Fig. 4: ein anderes gegenüber Fig. 1 vergrößertes Detail;

Fig. 5 bis 9: schematisierte Schnittbilder durch die Vorrichtung bei unterschiedlichen Betriebszuständen.

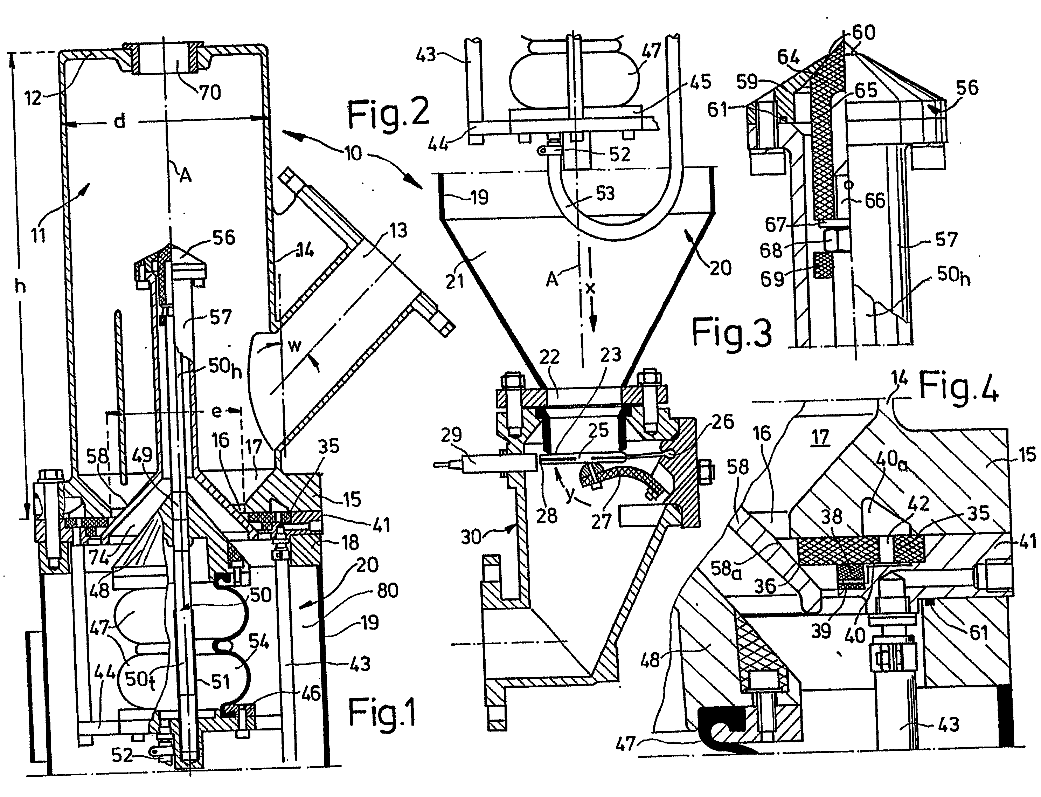

Die in Fig. 1, 2 aus Gründen der Uebersichtlichkeit geteilt dargestellte Vorrichtung 10 zum Fördern und Schleusen staub- oder granulatartigen Schüttgutes S weist einen oberen Rohrkörper 11 -- eines Durchmessers d von hier etwa 240 mm und einer Höhe h von etwa 500 mm -- mit daran angeformter Stirnplatte 12 sowie seitlichem Flanschrohrstutzen 13 auf, der mit seiner Rohrwandung 14 einen Winkel w von etwa 45° einschließt.

Unterhalb eines radial abragenden Flanschringes 15 des Rohrkörpers 11, dessen Ringöffnung 16 dank einer sich konisch verjüngenden Zulauffläche 17 von einem -- gegenüber der Rohrwandung 14 engeren -- Durchmesser e von z.B. 150 mm ist, verläuft koaxial zur Vorrichtungslängsachse A eine ebenfalls rohrförmige Behälterwandung 19 eines Schleusenbehälters 20, die in einen Auslaufkonus 21 übergeht. Letzterer endet nach unten hin in einem Austragstutzen 22 mit ringförmigem horizontalem Mündungsrand 23.

Dem Austragstutzen 22 ist in Förderrichtung x eine Auslaufklappe 25 nachgeschaltet, die bei 26 seitlich angelenkt und in der in fig. 1 gezeigten Verschlußstellung von einer Schließfeder 27 gegen dem Mündungsrand 23 als Dichtsitz gedrückt ist, wenn der Druck im Schleusenbehälter 20 geringer ist als der Förderdruck in einer seitlich an ein Auslaufgehäuse 30 angeschlossenen Förderleitung 31. Während eines Schwenkens der Auslaufklappe 25 in die Verschlußrichtung (Pfeil y) betätigt die Auslaufklappe 25 mittels eines Endorgans 28 einen -- induktiv, kapazitiv, magnetisch oder optisch wirkenden -- berührungslos auslösbaren Schalter 29 für einen noch zu beschreibenden Entlüftungsvorgang.

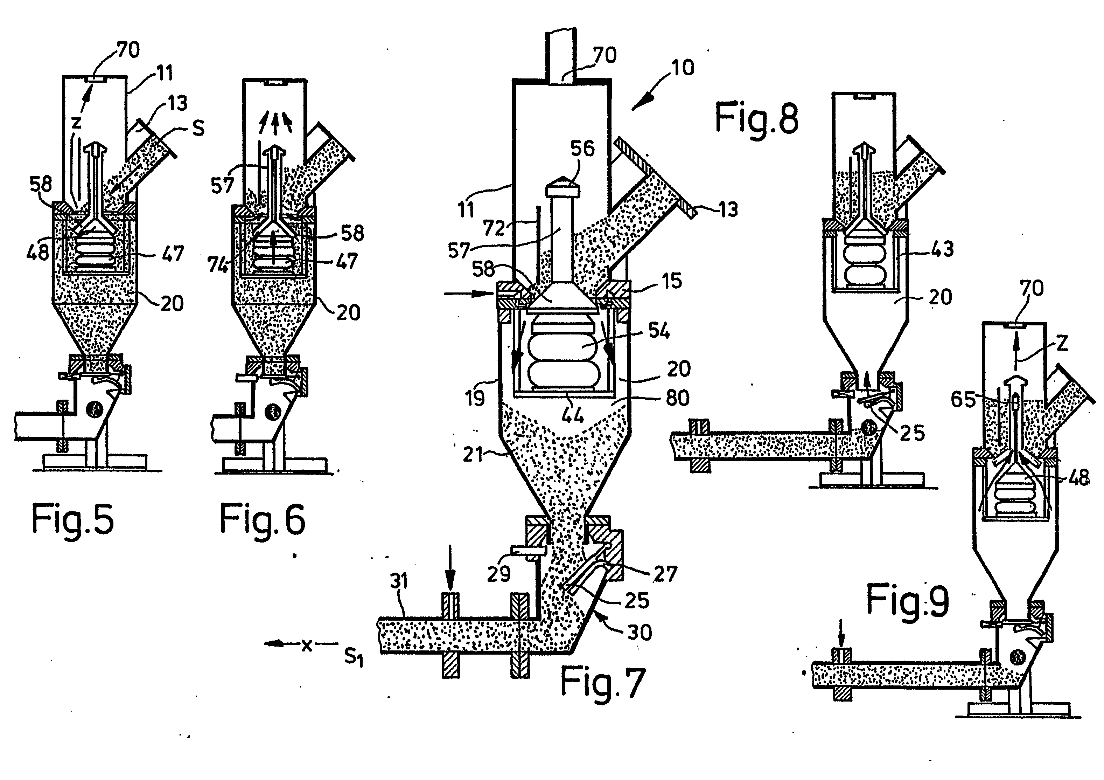

Zwischen Flanschring 15 und einer Halteplatte 18 der Behälterwandung 19 sitzt ein begrenzt elastischer Dichtring 35 mit Dichtkante 36 (Fig.4) und in Förderrichtung x unter diesem ein Zuführring 38 mit Bohrungen 39, die an eine nach oben offene Ringnut 40 in einem Zwischenring 41 anschließen. Unterhalb dessen sind Haltestäbe 43 für eine Sockelplatte 44 so festgelegt, daß ihr Abstand zum Auslaufkonus 21 etwa der Weite der Ringöffnung 16 entspricht.

Auf der Sockelplatte 44 liegt eine Bodenplatte 45 fest, an die mittels eines Klemmringes 46 der untere Rand eines Balges 47 angeschlossen und dessen oberer Rand in einen Kegelkopf 48 eingesetzt ist (Fig. 4). In letzterem enden zwei bei 49 eingeschraubte Teile eines Stabes 50. Das freie Ende des unteren Stabteiles $50_t$ lagert axial verschiebbar in einem Führungsrohr 51, das endwärts in die Sockelplatte 44 eingespannt ist und zwar neben einer Anschlußhülse 52 für einen Luftschlauch 53, mit dem der Innenraum 54 des Balges 47 zu be- und entlüften ist.

Der obere Teil $50_h$ des Stabes 50 verläuft bis zu einer hutartigen Kegelspitze 56 eines Axialrohres 57, welches nach unten hin in einen sich abwärts erweiternden Schließkegel 58 übergeht. In der in Fig. 1, 4 angedeuteten Stellung liegt die Kegelaußenfläche $58_a$ der bereits beschriebenen Dichtkante 36 des Dichtringes 35 an, und sein unterer Kegelrand $58_b$ steht etwa an der Unterkante des Zwischenringes 41.

Die Kegelspitze 56 des Axialrohres 57 wird von einem Dachring 59 etwa L-förmigen Querschnittes mit zentrischer Oeffnung 60 gebildet. Dieser Dachring 59 ist unter Zwischenschaltung eines Dichtringes 61 mit einem Flansch 62 des Axialrohres 57 verschraubt und ruht auf der Kegelspitze 64 einer querschnittlich U-förmigen Verlängerung 65 jenes axialen Stabes 50. Diese Verlängerung 65 ist aus begrenzt elastischem Werkstoff geformt und auf das Stabende 66 bis zum Anstoß an eine Anschlagscheibe 67 aufgedrückt. Unterhalb letzterer sind in Fig. 3 eine Mutter 68 und ein elastischer Führungsring 69 zu erkennen.

Gemäß Fig. 5 während des Füllvorganges das Schüttgut S durch den seitlichen Flanschrohrstutzen 13 in den Rohrkörper 11 hineingeleitet, aus dem es in den Schleusenbehälter 20 gelangt; der Schließkegel 58 steht dabei in Abstand zur Dichtkante 36, dies bei weitgehend entlüftetem Balg 47. Während dieses Füllvorganges wird die Auslaufklappe 25 im Auslaufgehäuse 30 von ihrer Schließfeder 27 und dem in der Förderleitung 31 herrschenden Luftdruck auf den Mündungsrand 23 des Austragstutzens 22 gepreßt.

Die während des Füllvorganges verdrängte Luft kann aus dem Rohrkörper 11 durch einen zentrischen Durchbruch 70 in der Stirnplatte 12 entweichen (siehe Pfeil Z).

Nach Ablauf der beispielsweise an einem Zeitrelais einstellbaren Füllzeit ist der Schleusenbehälter 20 gefüllt, und der Balg 47 wird mit Luft beaufschlagt. Gleichzeitig strömt gemäß Fig. 6 Blasluft durch die Bohrungen 39 des Zuführringes 38 gegen den Schließkegel 58; diese Blasluft gelangt zu den Bohrungen 39 über die bereits beschriebene Ringnut 40, Durchbrüche 42 im Dichtring 35 sowie eine weitere Ringnut $40_a$ im Flanschring 15, die in ihrer Querschnittsform in Fig. 4 deutlich zu erkennen ist. Der von der Blasluft produktfrei geblasene Schließkegel 58 wird vom Balg oder Balgzylinder 47 angehoben und dichtet nun den Druckraum 80 des Schleusenbehälters 20 zum Rohrkörper 11 hin ab.

Die weiter zuströmende Luft baut im Schleusenbehälter 20 den Förderdruck auf. Ist der Druck im Schleusenbehälter 20 so hoch wie in der Förderleitung 31, so öffnet sich die Auslaufklappe 25 für das Schüttgut.

Das den Schleusenbehälter 20 verlassende Schüttgut $S_1$ wird in die Förderleitung 31 gedrückt, oberhalb des Schließkegel 58 anstehendes zugeführtes Schüttgut S liegt zum Teil einer Vertikalwand 72 an, welche in Abstand sowie parallel zum Axialrohr 57 im Rohrkörper 11 verläuft.

Wenn der Schüttgut- oder Produktspiegel unter die Auslaufklappe 25 sinkt, wird diese von ihrer Schließfeder 27 wieder an den Mündungsrand 23 gehoben. Die aus dem Schleusenbehälter 20 nachströmende Luft reinigt die Klappenoberfläche. Betätigt die Auslaufklappe 25 den Schalter 29, so wird die Lufteinspeisung durch vom Schalter 29 gesteuerte -- in der Zeichnung nicht wiedergegebene -- Ventile unterbrochen, der Balg 47 entlüftet und der Kegelkopf 48 abgesenkt. Der Schließkegel 58 wird durch den noch im Schleusenbehälter 20 herrschenden Luftdruck an Dichtring bzw. der Kegeldichtung 38 gehalten, bis sich der Ueberdruck abgebaut hat.

Den Weg der ausströmenden Luft verdeutlicht Fig. 9: die Luft strömt aus dem Druckraum 80 des Schleusenbehälters 20 in einem vom Kegelkopf 48 sowie dem Schließkegel 58 begrenzten -- stets vorhandenen -- Ringspalt 74 aufwärts. Beim Entlüften des Balges 54 senkt sich der Kegelkopf 48 ab und nimmt den Stab 50 sowie dessen Verlängerung 65 mit nach unten - hierbei wird die zentrische Oeffnung 60 im Dachring 59 von jener Verlängerung als Verschlußelement 65 freigegeben, was das Entweichen der Luft aufwärts zum Durchbruch 70 der Stirnplatte 12 erlaubt.

Ist der Entlüftungsvorgang beendet, fällt der Schließkegel 58 durch sein Eigengewicht nach unten, und jene Verschlußelement 65 gelangt wieder -- diese schließend -- zur zentrischen Oeffnung 60. Der Füllvorgang kann erneut beginnen.

**Patentansprüche**

1. Vorrichtung mit einem Schleusenraum (80) zum Einschleusen eines Haufwerkes von Schüttgutpartikeln aus einem Stauraum in eine pneumatische Förderleitung, wobei der Schleusenraum wechselweise einerseits mittels eines axial bewegbaren Schließkegels (58) und diesem gegenüberliegender Dichtkante als dessen Sitz gegen den Stauraum sowie anderseits gegen die Förderleitung verschließbar ist, dadurch gekennzeichnet, daß der Schließkegel (58) Basisteil eines etwa axial in Förderrichtung (x) vor dem Schleusenraum (80) verlaufenden Hohlprofils (57) mit wenigstens einer außerhalb des Fließweges des Schüttgutes (S) angeordneter Oeffnung (60) ist, deren Querschnitt in der Bewegungsbahn eines Verschlußelementes (65) liegt, das in Abhängigkeit vom Fördervorgang zu der Oeffnung hin oder von ihr weg bewegbar vorgesehen ist.

2. Vorrichtung nach Anspruch 1, dadurch gekennzeichnet, daß das Verschlußelement (65) am freien Ende eines Stabes (50) sitzt und in seiner Schließstellung ein die Öffnung/en (60) aufweisendes Kopfteil (56) des als Rohr (57) ausgebildeten Hohlprofils trägt, dessen Innenraum Teil des Schleusenraumes (80) ist.

3. Vorrichtung nach Anspruch 1 oder 2, dadurch gekennzeichnet, daß dem Schließkegel (58) zum Schleusenraum (80) hin in Abstand ein Kegelkopf (48) zugeordnet und dieser mit dem Stab (50) fest verbunden ist, wobei gegebenenfalls der Stab (50) den Kegelkopf (48) durchsetzt und mit seinem freien Ende (50t) mit Spiel in einem Führungsrohr (51) lagert.

4. Vorrichtung nach einem der Ansprüche 1 bis 3, dadurch gekennzeichnet, daß der Abstand des Kegelkopfes (48) zur Spitze des Verschlußelementes (65) größer ist als die freie innere Länge des Rohres (57), und/oder, daß der Kegelkopf (48) an ein Hubelement in Form eines axial längenveränderlichen Balgorgans (47) angefügt ist, dessen Innenraum (54) an eine Druckluftleitung angeschlossen ist.

5. Vorrichtung nach einem der Ansprüche 1 bis 4, dadurch gekennzeichnet, daß das Rohr (57) einen sich nach unten hin erweiternden schüsselartigen Dachring (59) mit zentrischer Öffnung (60) als Rohrkopf aufweist, und/oder daß das Rohr (57) in einem Vorraum (11) verläuft, der unterhalb des Rohrkopfes (56) einen Zulauf (Rohrstutzen 13) für das Schüttgut (S) und oberhalb des Rohrkopfes wenigstens einen Durchbruch (70) aufweist.

6. Vorrichtung nach einem der Ansprüche 1 bis 5, dadurch gekennzeichnet, daß das Verschlußelement (65) des Stabes (50) eine haubenähnliche Büchse aus begrenzt elastischem Werkstoff ist, die sich nach oben hin konisch verjüngender Spitze ist, und/oder, daß der Stab (50) aus Stabteilen (50h, 50t) besteht, welche durch den Kegelkopf (48) verbunden sind.

7. Vorrichtung nach wenigstens einem der Ansprüche 1 bis 16, dadurch gekennzeichnet, daß in Abstand zum Rohr (57) an der vom Zulauf (13) abgekehrten Seite des Vorraumes (11) eine Trennwand (72) verläuft, welche in Abstand zu der Oberfläche des Schließkegels (58) steht.

8. Vorrichtung mit von einem Dichtring gebildeter Dichtkante für den Schließkegel nach wenigstens einem der Ansprüche 1 bis 7, dadurch gekennzeichnet, daß der Vorraum (11) von einer Rohrwandung (14) begrenzt ist, die mit einer sich in Förderrichtung (x) verjüngenden Zulauffläche (17) an den Dichtring (35) angrenzt, und daß an diesem die Radialfläche der Rohrwandung eine Ringnut (40a) od.dgl. aufweist, wobei gegebenenfalls der Ringnut (40a) der Rohrwand (14) an der anderen Seite des Dichtringes (35) wenigstens eine andere Ringnut (40) od.dgl. gegenüberliegt und diese an die radiale Luftkanäle (39) anschließt, welche zum Schließkegel (58) gerichtet sind.

9. Vorrichtung nach wenigstens einem der Ansprüche 1 bis 8, dadurch gekennzeichnet, daß die Luftkanäle (39) in einem Zuführring (38) vorgesehen sind und dessen Innenfläche in radialem Abstand zur Dichtkante (36) nach außen versetzt ist.

10. Verfahren zur Steuerung eines Schleusvorganges zum Einschleusen eines Haufwerkes von Schüttgutpartikeln aus einem Vorratsbehälter in eine pneumatische Förderleitung unter Förderdruck durch einen Schleusenraum der Vorrichtung nach wenigstens einem der Ansprüche 1 bis 9, wobei ein einer Dichtkante anliegender Schließkegel den Schleusenraum gegen den Vorratsbehälter od.dgl. verschließt, dadurch gekennzeichnet, daß der Schleusenraum durch den Schüttgutstrom hindurch gegen die Förderrichtung entlüftet wird.

**Claims**

1. Apparatus comprising a charging chamber (80) for feeding a heap of debris consisting of bulk material particles from a material feed into a pneumatic conveyor conduit, the charging chamber being lockable alternately on the one hand relative to the material feed by means of an axially movable closure cone (58) and a sealing edge opposite to it, and on the other hand relative to the conveyor conduit, characterized in that the closure cone (58) constitutes a base portion of a hollow section (57) extending substantially axially in the conveying direction (x) upstream of the charging chamber (80) and having at least one opening (60) which is arranged outside the flow path of the bulk material (S), the cross-section of the opening being disposed in the path of movement of a closure element (65) which is arranged movably towards and from the opening in dependence of the conveying operation.

2. Apparatus according to claim 1, characterized in that the closure element is arranged on the end position of a bar (50) and carries, in its closure position, a head portion (56) — having the opening/s (60) — of the hollow section developed as a tube (57), whose interior is part of the charging chamber (80).

3. Apparatus according to claim 1 or 2, characterized in that a cone head portion (48) is associated with the closure cone (58) towards the charging chamber (80) at a spacing therefrom and is fixedly connected to the bar (50) which possibly passes through the cone head portion (48) and is housed with its free end portion (50t) with clearance in a guide tube (51).

4. Apparatus according to one of the claims 1 to 3, characterized in that the spacing of the cone head portion (48) relative to the tip of the closure element (65) is greater than the free internal length of the tube (57), and/or that the cone head portion (48) is mounted on a stroke-producing actuating means in the form of a bellow means (47) which is axially variable in length and whose interior (54) is connected to a compressed air conduit.

5. Apparatus according to one of the claims 1 to 4, characterized in that the tube (57) has a head portion in the form of a roof-shaped dish-like ring (59) which enlarges in a downward direction and has a centric opening (60), and/or that the tube (57) extends in an upstream chamber (11) which has a feed means (pipe socket 13) for the bulk material (S) below the tube head (56) and at least one aperture (70) above the tube head.

6. Apparatus according to one of the claims 1 to 5, characterized in that the closure element (65) of the bar (50) is a hood-like sleeve of a material of limited elasticity, having an upwardly conically tapering tip, and/or that the bar (50) comprises bar portions (50h, 50t) connected together at the cone head portion (48).

7. Apparatus according to at least one of the claims 1 to 6, characterized in that at a spacing from the tube (57) at the side of the upstream chamber (11) which is remote from the feed means (13) a partition wall (72) is disposed at a spacing from the surface of the closure cone member (58).

8. Apparatus comprising a sealing edge providing a sealing ring for the closure cone according to at least one of the claims 1 to 7, characterized in that the upstream chamber (11) is delimited by a tubular wall means (14) which adjoins the sealing ring (35) with a feed flow surface (17) which tapers in the direction of conveying movement (x) by means of a feed flow surface tapering in the direction of conveying movement (x), and that on said sealing ring the radially extending surface of the tubular wall means shows an annular groove (40a) or the like, wherein in opposite relationship to the annular groove (40a) of the tubular wall means (14) at the other side of the sealing ring (35) is at least one further annular groove (40) or the like which adjoins the radially extending air ducts (39) directed towards the closure cone (58).

9. Apparatus according to at least one of the claims 1 to 8, characterized in that the air ducts (39) are provided in a feed ring (38) and the inside surface is displaced outwardly at a radial spacing relative to the sealing edge (36).

10. Process for controlling a charging operation for feeding a heap of debris consisting of bulk material particles from a material feed into a pneumatic conveyor conduit under feed pressure through a charging chamber of the apparatus according to at least one of the claims 1 to 9, wherein a closure cone adjoining a sealing edge closes the charging chamber against the material feed or the like, characterized in that the charging chamber is deaerated through the bulk material stream against the direction of conveying movement.

## Revendications

1. Dispositif avec une chambre de sas (80) pour écluser un amas de particules de matières en vrac d'une chambre de retenue dans une tuyauterie de transport pneumatique, la chambre de sas étant à obturer alternativement d'un côté moyennant un cône de fermeture (58) mobil dans le sens axial et l'arête d'étanchéité opposée à celui-ci et servant de son logement contre la chambre de retenue ainsi que d'autre côté contre la tuyauterie de transport, caractérisé en ce que le cône de fermeture (58) constitue la partie de base d'un profilé creux (57) qui est placé à peu près axialement dans la direction de transport (x) devant la chambre de sas (80) et qui possède au moins une ouverture (60) se trouvant au-dehors du chemin de transport des matières en vrac (S) dont la section transversale se trouve dans la trajectoire d'un élément de fermeture (65) qui est prévu de manière mobile – selon le procédé de transport – vers l'ouverture ou en sens opposé.

2. Dispositif selon la revendication 1 caractérisé en ce que l'élément de fermeture (65) se trouve à l'extrémité libre d'une barre (50) et porte, dans sa position de fermeture, une partie de tête (56) – possédant la/les ouverture(s) (60) – du profilé creux formé comme tuyau (57) dont la chambre intérieure constitue une partie de la chambre de sas (80).

3. Dispositif selon la revendication 1 ou 2 caractérisé en ce que au cône de fermeture (58) est attribué à distance vers la chambre de sas (80) une tête de cône (48) et que celle-ci est liée de manière fixe à la barre (50), la barre (50) traversant le cas échéant – la tête de cône (48) et logeant avec son extrémité libre (50t) avec du jeu dans un tuyau conducteur (51).

4. Dispositif selon une des revendications 1 à 3 caractérisé en ce que la distance de la tête du cône (48) à la pointe de l'élément de fermeture (65) est supérieure à la longueur intérieure libre du tuyau (57) et/ou que la tête du cône (48) est jointe à un élément de levage sous forme d'un soufflet (47) variable en longueur dans le sens axial dont la chambre intérieure (54) est raccordée à une conduite d'air comprimé.

5. Dispositif selon une des revendications 1 à 4 caractérisé en ce que le tuyau (57) présente un anneau de toit (59) en forme de clé en tant que tête du tuyau s'élargissant vers le bas et possédant une ouverture centrée (60) et/ou que le tuyau (57) se trouve dans une chambre de devant (11) qui présente une arrivée (piquage sur conduite 13) pour les matières en vrac (S) au-dessous de la tête de tuyau (56) et au moins un ajour (70) au-dessus de la tête de tuyau.

6. Dispositif selon une des revendications 1 à 5 caractérisé en ce que l'élément de fermeture (65) de la barre (50) est une boîte ressemblant à un capot d'une matière élastique dans une certaine limite avec une pointe conique vers le haut et/ou que la barre (50) consiste en parties de barre (50h, 50t) qui sont liées moyennant la tête de cône (48).

7. Dispositif selon au moins une des revendications 1 à 6 caractérisé en ce que à distance du tuyau (57) au côté de la chambre de devant (11) opposé à l'arrivée (13) se trouve une paroi de séparation (72) qui est à distance de la superficie du cône de fermeture (58).

8. Dispositif avec une tête d'étancheité formée d'un anneau d'étanchéité pour le cône de fermeture selon au moins une des revendications 1 à 7 caractérisé en ce que la chambre de devant (11) est limitée par une paroi de tuyau (14) qui avoisine à l'anneau d'étanchéité (35) avec une surface d'arrivée (17) se rétrécissant dans la direction de transport (x) et que à celui-ci la surface radiale de la paroi du tuyau présente une rainure annulaire (40a) ou une chose semblable, à la rainure annulaire (40a) de la paroi du tuyau (14) – le cas échéant – se trouvant en face au moins une autre rainure annulaire (40) ou une chose semblable sur l'autre côté de l'anneau d'étanchéité (35) et que celle-ci se raccorde aux canaux d'air radiaux (39) qui sont dirigés vers le cône de fermeture (58).

9. Dispositif selon au moins une des revendications 1 à 8 caractérisé en ce que les canaux d'air (39) sont prévus dans un anneau d'alimentation (38) et que la surface intérieure de celui-ci est déplacée vers l'extérieur à distance radiale à l'arête d'étanchéité (36).

10. Dispositif pour commander une opération d'éclusage pour écluser un amas de particules de matières en vrac d'un réservoir dans une tuyauterie de transport pneumatique sous pression de refoulement à travers une chambre de sas du dispositif selon au moins une des revendications 1 à 9, un cône de fermeture adjacent à une arête d'étanchéité fermant la chambre de sas contre le réservoir ou une chose semblable caractérisé en ce que la chambre de sas est ventilée à travers le flux de matières en vrac contre la direction de transport.

Fig.1  Fig.2  Fig.3  Fig.4

Fig.5

Fig.6

Fig.7

Fig.8

Fig.9